# EUROPÄISCHE PATENTSCHRIFT

(11) **EP 1 516 200 B1**
(45) Veröffentlichungstag und Bekanntmachung des Hinweises auf die Patenterteilung: **02.01.2008**
(21) Anmeldenummer: 03727167.3
(22) Anmeldetag: 02.04.2003
(51) Int. Cl.: G01S 7/288, G01S 13/93

(54) **VERFAHREN UND VORRICHTUNG ZUM ERZEUGEN VON HF-SIGNALEN ZUM BESTIMMEN EINES ABSTANDES UND/ODER EINER GESCHWINDIGKEIT EINES OBJEKTES**
METHOD AND DEVICE FOR GENERATING HF SIGNALS FOR DETERMINING THE DISTANCE AND/OR THE SPEED OF AN OBJECT
PROCEDE ET DISPOSITIF POUR PRODUIRE DES SIGNAUX HF QUI SERVENT A DETERMINER LA DISTANCE A LAQUELLE SE TROUVE UN OBJET ET/OU SA VITESSE

(30) Priorität: 14.06.2002 DE 10226575
(43) Veröffentlichungstag der Anmeldung: 23.03.2005
(73) Patentinhaber: ROBERT BOSCH GMBH, 70442 Stuttgart (DE)
(72) Erfinder: STEINBUCH, Dirk, 71299 Wimsheim (DE); REICHE, Martin, 74321 Bietigheim (DE)
(86) Internationale Anmeldenummer: PCT/DE2003/001077
(87) Internationale Veröffentlichungsnummer: WO 2003/107032

(56) Entgegenhaltungen:
- US-A- 4 529 985
- US-A- 4 707 697
- US-B1- 6 211 815

## Beschreibung

### STAND DER TECHNIK

Die vorliegende Erfindung betrifft ein Verfahren und eine Vorrichtung zum Erzeugen von HF-Signalen zum Bestimmen eines Abstandes und/oder einer Geschwindigkeit eines Objektes.

Systeme zum Messen der Entfernung und der Geschwindigkeit statischer bzw. sich bewegender Objekte mittels Hochfrequenz (Radar) nehmen vor allem in der Kraftfahrzeugindustrie einen zunehmend höheren Stellenwert ein. Die Detektion von Objekten mittels Radar wird heutzutage bereits für Einparkhilfen bzw. Geschwindigkeitsregelanlagen mit Abstandsmessung bei großen Abständen, wie z.B. bei Autobahnfahrten, eingesetzt. Zusätzliche Einsatzgebiete solcher Systeme liegen bei der Überwachung des sogenannten toten Winkels eines Fahrzeugs, der Pre-Crash-Detektion zur gesteuerten Betätigung von Airbags bzw. Gurtstrammern, sogenannte backing aids (Rückfahrhilfen) aber auch Geschwindigkeitsregelanlagen, welche einen Betrieb aufgrund einer höheren Auflösung des Systems auch bei geringeren Abständen wie bei Überlandfahrten oder im Stadtverkehr ermöglicht.

Ein bekanntes System ist das Radar-Frontend-System namens SRR (short range radar) welches bei einer Frequenz von 24,125 GHz arbeitet und eine Entfernungsbestimmung durch Aussendung und Laufzeitbestimmung von HF-Pulsen der typischen Breite von 400 ps erlaubt.

Im Rahmen der Zulassungsbeschränkungen für Strahlungsemissionen in den USA und künftig ebenfalls in Europa besteht eine Notwendigkeit in der Absenkung der Sendeleistung solcher Systeme, wodurch die Reichweite eines solchen Systems eingeschränkt wird. Zur Gewährleistung des sicheren Betriebes, z.B. eines solchen Abstandsradars für eine Geschwindigkeitsregelanlage, ist jedoch eine vorgegebene Reichweite unbedingt einzuhalten.

### VORTEILE DER ERFINDUNG

Das erfindungsgemäße Verfahren und die erfindungsgemäße Vorrichtung zum Erzeugen von HF-Signalen zum Bestimmen eines Abstandes und/oder einer Geschwindigkeit eines Objektes mit den Merkmalen des Anspruchs 1 bzw. 18 weist gegenüber dem bekannten Lösungsansatz den Vorteil auf, dass eine bessere Rauschzahl und damit eine erhöhte Detektionsentfernung erreicht werden kann, um eine eventuell erforderliche Leistungsabsenkung kompensieren zu können, d.h. auch bei Absenkung der Sendeleistung alle geforderten Funktionen erfüllt werden, insbesondere unter Beibehaltung der System- bzw. Sensorkosten.

Die der vorliegenden Erfindung zugrundeliegende Idee besteht darin, dass ein Superheterodyn- Konzept unter Beachtung notwendiger Modifikationen auf die Architektur des bekannten SRR (short range radar) angewendet werden.

In der vorliegenden Erfindung wird das eingangs erwähnte Problem insbesondere dadurch gelöst, dass ein gepulstes moduliertes Signal aus einem ersten Signal und einem zweiten Signal in einer Signalerzeugungseinrichtung generiert wird, welches über eine Sendeeinrichtung abgestrahlt wird, und über eine Empfangseinrichtung ein von einem Objekt reflektiertes gepulstes Signal empfangen wird, wobei daraus ein gepulstes demoduliertes Signal mit Hilfe des ersten Signals in einer ersten Signalverarbeitungseinrichtung erzeugt wird, und ein kohärentes Signal aus diesem gepulsten demodulierten Signal mit Hilfe des zweiten Signals und ein nicht kohärentes Signal aus dem gepulsten demodulierten Signal in einer zweiten Signalverarbeitungseinrichtung erzeugt wird.

In den Unteransprüchen finden sich vorteilhafte Weiterbildungen und Verbesserungen des in Anspruch 1 angegebenen Verfahrens und der in Anspruch 18 angegebenen Vorrichtung.

Gemäß einer bevorzugten Weiterbildung wird in der Signalerzeugungseinrichtung mit einem ersten HF-Oszillator das erste Signal und mit einem zweiten HF-Oszillator das zweite Signal erzeugt, welche in einer Modulationseinrichtung in ein moduliertes Signalpaar moduliert werden. Dies weist den Vorteil auf, dass das Modulieren des zweiten Signals (Kohärenzoszillator-Signal Coho) auf das erste Signal (HF-Oszillator Stalo) durch die Modulationseinrichtung vor einer HF- Schalteinrichtung schmalbandig erfolgen kann. Ein weiterer Vorteil besteht darin, dass die Modulationseinrichtung prinzipiell unbalanciert ausgeführt werden kann und folglich lediglich auf einer einzelnen Diode basieren kann.

Gemäß einer weiteren bevorzugten Weiterbildung wird das modulierte Signalpaar in einer Filtereinrichtung, insbesondere einem Hochpassfilter, in ein gefiltertes moduliertes Signal und durch eine Schalteinrichtung in ein gepulstes moduliertes Signal umgewandelt. Dadurch ergibt sich der Vorteil, dass das durch die Modulation entstehende ungewünschte untere Seitenband durch Filterung zum Beispiel durch ein geätztes Streifenleitungsfilter auf dem HF-Substrat oder durch ein integriertes Filter aus Gründen der Platzeinsparung unterdrückt werden kann. Falls die erste Modulationseinrichtung aus einer Diode besteht (unbalancierter Upkonverter), so bleibt im resultierenden Mischprodukt ein erheblicher Restträger bei 24 GHz. Auch dieser muss durch den Hochpass unterdrückt werden. Bei Einsatz eines balancierten Mischers wird der Restträger weitgehend als Mischprodukt vermieden.

Gemäß einer weiteren bevorzugten Weiterbildung wandelt die erste Signalverarbeitungseinrichtung das empfangene Signal mit Hilfe des ersten Signals in einer zweiten Modulationseinrichtung in ein demoduliertes Signal und mittels einer zweiten Schalteinrichtung in ein gepulstes demoduliertes Signal um. Dies ermöglicht die Verwertung der Amplitudeninformation des Sendesignals nicht wie beim SRR mittels einer Schalteinrichtung im HF-Zweig, sondern durch eine Schalteinrichtung nach der ersten Demodulation. Der Schalter auf der ZF- Frequenz ist kostengünstiger realisierbar. Das Abtasten des ZF- Signals erfolgt auf einem höheren Signalpegel, z.B. nach ZF- Vorverstärkung.

Gemäß einer weiteren bevorzugten Weiterbildung wird das gepulste demodulierte Signal mittels einem Gleichrichter und einer Filtereinrichtung, insbesondere einem Tiefpassfilter, in das nicht-kohärente Hüllkurvensignal umgewandelt. Dies hat den Vorteil, dass durch diese Hüllkurvendetektion bei der aufgrund der nicht-kohärenten Demodulation durch den Gleichrichter die Phaseninformation verloren geht, keine Nulldurchgänge im Gegensatz zum SRR erzeugt werden, weshalb auf eine aufwendige I/Q - Demodulation in der zweiten Modulationseinrichtung verzichtet werden kann.

Gemäß einer weiteren bevorzugten Weiterbildung wird das gepulste demodulierte Signal in einer dritten Modulationseinrichtung mit Hilfe des zweiten Signals zu einem zweifach demodulierten gepulsten Signal demoduliert. Der Vorteil dieses Schrittes besteht darin, dass somit das gepulste demodulierte Signal, welches die Entfernungsinformation beinhaltet, nachfolgend in der dritten Modulationseinrichtung mit dem zweiten Signal demoduliert wird und nach Auswertung die Geschwindigkeitsbestimmung über den Dopplereffekt erlaubt. Durch die kohärente Demodulation bleibt die Phaseninformation erhalten.

Gemäß einer weiteren bevorzugten Weiterbildung wird das gepulste zweifach demodulierte Signal einem Integrator zugeführt, welcher das Signal zu dem kohärenten Signal aufintegriert. Dies ermöglicht die Auswertung des kohärenten Signals und folglich die Geschwindigkeitsmessung über den Dopplereffekt.

Gemäß einer weiteren bevorzugten Weiterbildung werden in einer Pulserzeugungseinrichtung Pulssignale zum Aktivieren der Schalteinrichtungen erzeugt. Dadurch wird eine präzise Ansteuerung der ersten und zweiten Schalteinrichtung ermöglicht.

Gemäß einer weiteren bevorzugten Weiterbildung wird ein extern und ein intern um einen festen Mittelwert einer vorbestimmten Periodendauer wechselnd leicht verschobenes Taktsignal in einer Multiplexeinrichtung der Pulserzeugungseinrichtung zusammengefasst und über Pulsformer Aktivierungssignale der Schalteinrichtungen generiert. Dadurch wird ein vorteilhaftes nicht-äquidistantes Pulsmuster des gesendeten HF-Signals ermöglicht.

Gemäß einer weiteren bevorzugten Weiterbildung liegt die Frequenz des ersten Signals bei etwa 21,5 GHz und die Frequenz des zweiten Signals bei etwa 2,5 GHz. Dies birgt den Vorteil, dass die resultierende Sendefrequenz (in diesem Fall 24GHz) im ISM-Band um 24,125 GHz liegt, welches erforderlich ist, da eine Restabstrahlung dieses Trägers unvermeidbar ist, und diese in ein freigegebenes Band fallen muss.

Gemäß einer weiteren bevorzugten Weiterbildung liegt die Frequenz des ersten Signals bei etwa 24 GHz und die Frequenz des zweiten Signals bei etwa 2,5 GHz bis 3,5 GHz. Daraus ergibt sich der Vorteil, dass die resultierende Sendefrequenz von 25 GHz bis 27.5 GHz auf eine gewünschte Aussendung außerhalb verbotener Bänder zur Vermeidung von Zulassungsproblemen ausgelegt ist.

Gemäß einer weiteren bevorzugten Weiterbildung wird das von der Empfangseinrichtung empfangene Signal in einem low-noise-amplifier verstärkt, bevor es der ersten Signalverarbeitungseinrichtung zugeführt wird. Dies ermöglicht eine weitere Reduzierung der Rauschzahl des Gesamtradars um weitere 6 dB.

Gemäß einer weiteren bevorzugten Weiterbildung wird das demodulierte Signal nach der zweiten Modulationseinrichtung in einer Verstärkereinrichtung, insbesondere einem ZF- Vorverstärker, verstärkt, bevor es der zweiten Schalteinrichtung zugeführt wird. Dadurch wird der Signalpegel vorteilhaft angehoben.

### ZEICHNUNGEN

Ausführungsbeispiele der Erfindung sind in den Zeichnungen dargestellt und in der nachfolgenden Beschreibung näher erläutert.

Es zeigen:
- Figur 1: eine schematische Darstellung einer Vorrichtung zur Erläuterung der Funktionsweise einer ersten Ausführungsform der vorliegenden Erfindung.
- Figur 2: ein Blockdiagramm zur schematischen Darstellung einer Vorrichtung gemäß einer zweiten Ausführungsform der vorliegenden Erfindung; und

### BESCHREIBUNG DER AUSFÜHRUNGSBEISPIELE

In den Figuren bezeichnen gleiche Bezugszeichen gleiche oder funktionsgleiche Bestandteile.

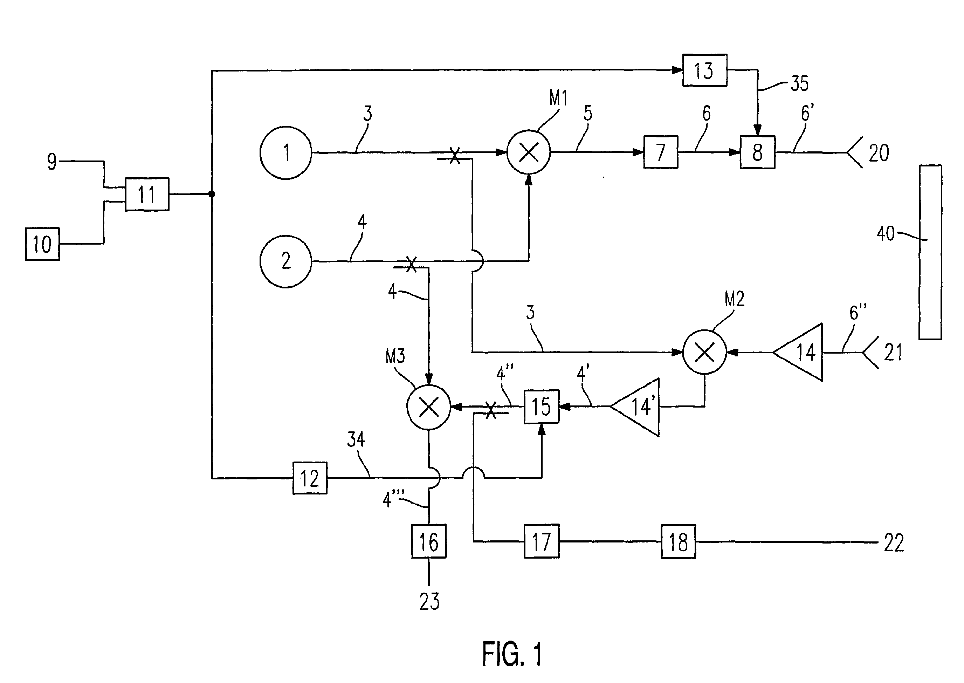

Figur 1 zeigt eine schematische Darstellung einer Vorrichtung zur Erläuterung der Funktionsweise einer ersten Ausführungsform der vorliegenden Erfindung.

In Figur 1 ist ein superheterodynes Radarsystem auf Pulsbasis insbesondere für den Nahbereich dargestellt. In einer ersten Signalquelle 1 wird ein erstes Hochfrequenzsignal 3 (Stalo) der Frequenz f_{ST} erzeugt. In einer zweiten Signalquelle 2 wird ein zweites Hochfrequenzsignal 4 (Coho) der Frequenz f_{ZF} erzeugt. In einer ersten Modulationseinrichtung M1, welche z.B. im Wesentlichen auf einer einzelnen Diode basiert und unbalanciert ausgeführt ist, wird das zweite Signal 4 auf das erste Signal 3 aufmoduliert. Die Modulation entspricht im Wesentlichen einer Multiplikation im Zeitbereich, d.h. einer Addition im Frequenzbereich, wodurch ein moduliertes Signalpaar 5 entsteht, welches die Frequenzen f_{ST} ± f_{ZF} aufweist.

Das unerwünschte untere Seitenband f_{ST} - f_{ZF} des modulierten Signalpaares 5 sowie der Restträger f_{ST} wird in einer Filtereinrichtung 7 beispielsweise einem geätzten Streifenleitungsfilter auf dem HF-Substrat oder einem integrierten Filter (um Platz einzusparen) unterdrückt, so dass ein gefiltertes moduliertes Signal 6 der Frequenz f_{ST} + f_{ZF} an eine erste Schalteinrichtung 8 weitergeleitet wird.

Ein extern mit Bezug auf einen vorbestimmten Mittelwert einer Periodendauer dauerhaft leicht verschobenes PRF-Signal 9 (pulse repeated frequency) wird mit einem intern leicht verschobenen PRF-Signal 10 (pulse repeated frequency) in einer Multiplex-Einrichtung 11 kombiniert. Daraus resultiert eine ständig leicht variierte Wiederholrate, z.B. im Bereich zwischen 350 bis 450 ns, um äquidistante durch einen empfängerseitigen Pulsformer 12 und einen senderseitigen Pulsformer 13 erzeugte Aktivierungssignale 34, 35 zu vermeiden.

Das externe PRF- Signal 9 stammt vorzugsweise von einem Kreuzecho- Partner (nicht dargestellt). Der Detektionsbereich einer Kreuzechovermessung liegt symmetrisch um die Halbachse auf dem Abstand zwischen dem Sender und dem Empfänger. Das PRF- Signal 9 wird dem Empfänger über ein internes Delay 12 zugeführt. Ein möglicher Trägerfrequenzversatz von Sender und Empfänger, z.B. auf Grund von Toleranzen oder Alterungserscheinungen, ist klein in Vergleich zur Bandbreite des ZF- Kanals. Darum kann auch ein frequenzversetztes Signal im nicht- köhärenten Empfangspfad Hüllkurven-demoduliert werden.

Bei der indirekten Triangulation bzw. beim Kreuzechoverfahren sendet ein erster Sensor ein Signal einer ersten Trägerfrequenz, wobei mindestens ein zweiter lateral beabstandeter Sensor, z.B. in einem Abstand von 1 m, das von einem Objekt reflektierte erste Signal empfängt. Der zweite Sensor kann auf eine leicht unterschiedliche Trägerfrequenz ausgelegt sein, solange die Frequenzdifferenz die Bandbreite des ZF- Kanals nicht überschreitet. Durch die mindestens zwei lateral auseinanderliegenden Sensoren wird eine mittige Richtcharakteristik ermöglicht.

Die Pulsformer 12, 13 legen die Pulsdauer z.B. 400 ps oder 1 ns fest, bei der die erste Schalteinrichtung 8 bzw. eine zweite Schalteinrichtung 15 aktiviert wird. Durch das Aktivierungssignal 35 wird die Einschaltdauer der ersten Schalteinrichtung 8 gesteuert, so dass aus dem gefilterten, modulierten Signal 6 ein gepulstes, moduliertes Signal 6' wird, welches über eine Sendeeinrichtung 20, z.B. eine Antenne, abgestrahlt wird.

Das über die Antenne 20 abgestrahlte gepulste, modulierte Signal 6' wird an einem Objekt 40 reflektiert, welches von einer Empfangseinrichtung 21 empfangen wird. Ein von der Empfangseinrichtung 21 empfangenes Signal 6 " durchläuft einen low-noise-Verstärker 14 und wird einer zweiten Modulationseinrichtung M2 zugeführt. Die zweite Modulationseinrichtung M2 demoduliert das empfangene Signal 6" mit dem ersten Signal 3, wobei der Mischer M2 ein demoduliertes Signal der Frequenz f_{ZF} ausgibt.

Dieses demodulierte Signal 4' wird einer zweiten Schalteinrichtung 15 zugeführt, welche in Abhängigkeit von dem Aktivierungssignal 34 ein gepulstes demoduliertes Signal 4 " der Frequenz f_{ZF} erzeugt. Das demodulierte Signal 4' kann vor der zweiten Schalteinrichtung 15 einer Verstärkereinrichtung (14'), z.B. einem ZF- Vorverstärker, zugeführt werden, um den Signalpegel anzuheben. In einer dritten Modulationseinrichtung M3 wird das gepulste demodulierte Signal 4 " mit dem zweiten Signal 4 des zweiten HF-Oszillators (Coho) d.h. dem Kohärenzoszillator demoduliert, so dass ein zweifach demoduliertes gepulstes Signal 4"', d.h. eine Basispulskette bei f=0, entsteht.

Da das gepulste demodulierte Signal 4 " die gewünschte Entfernungsinformation der Vorrichtung zu dem Objekt 40 enthält, erlaubt das mit dem Kohärenzsignal 4 demodulierte Signal 4" nach Auswertung des Signals 4"' in einem Integrator 16 die Bestimmung der Geschwindigkeit über den Dopplereffekt aus dem kohärenten Signal 23. Das gepulste demodulierte Signal 4" wird parallel dazu durch einen Gleichrichter 17 einer nicht-kohärente Demodulation unter Verlust der Phaseninformation unterzogen. Diese Hüllkurvendetektion erzeugt jedoch keine Nulldurchgänge, da keine Phasenabhängigkeit vorliegt, weshalb man auf eine aufwendige I/Q-Modulation (Inphase-Quadratur- Demodulation) im Mischer M2 verzichten kann. An den Gleichrichter 17 schließt sich eine Filtereinrichtung 18 z.B. ein Tiefpassfilter an, an dessen Ausgang ein nicht-kohärentes Signal 22 z.B. zur Bestimmung des Abstandes im Kreuzechoverfahren und statischer Ziele ausgegeben wird.

Die Wahl der Frequenz f_{ZF} des zweiten Signals, beispielsweise 2,5 GHz, bestimmt sich zum Einen aus den Anforderungen eines realisierbaren HF-Filters, welche bei einer höheren Frequenz f_{ZF} weniger schwer zu erfüllen sind, und den Anforderungen für die nicht-kohärente Hüllkurven-Demodulation des gepulsten demodulierten Signals 4". Die Eckfrequenz des nachfolgenden Tiefpasses trennt vorteilhafterweise präzise zwischen den Grenzen des Basisbandes (gleichgerichtetes Signal um 0 Hz) und der Frequenz f_{ZF} bei 2,5 GHz. Daraus ergibt sich eine in diesem Beispiel sinnvolle Grenzfrequenz von 1,25 GHz.

Grundsätzlich muss die Bandbreite der Frequenz f_{ZF} das doppelseitige HF-Pulsspektrum umfassen. Bei einer HF-Pulsbreite von 500 ps liegt die 10 dB-Bandbreite bei 2,4 GHz und die 20 dB-Bandbreite bei 3,4 GHz, wenn man eine Gauss-förmige Pulsform im Zeitbereich annimmt. In dem Zweig der Hüllkurvendetektion sind die möglichen Dopplerverschiebungen bis zu 10 kHz vernachlässigbar. Der Mischer M3 kann aus Kostengründen als einfach balancierter Mischer ausgeführt werden, da bei der Entfernungsbestimmung keine Nullstellen auftreten und für die Geschwindigkeitsbestimmung ein von einem alternativen I/Q-Mischer herrührendes I/Q-Signal nicht unbedingt erforderlich ist.

Der Mischer M2 wird einfach balanciert konzipiert, um von der Unterdrückung des Amplitudenrauschens der ersten HF-Quelle (Stalo) zu profitieren. Auf den low-noise-amplifier kann eventuell verzichtet werden, da durch die Verbesserung der Rauschzahl des Gesamtradarsystems die weiteren 6 dB dieses Verstärkers für die Erfüllung der geplanten Funktionen nicht notwendigerweise erforderlich und somit diese kostenintensive Komponente eventuell verzichtbar ist. Der dritte Mischer M3 kann in diesem Frequenzbereich als kostengünstiger, integrierter Gilbert-Cell-Mischer ausgelegt werden und die notwendige Verstärkung ohne weitere Verstärkerstufen oder mit einem Vorverstärker 14' zwischen Mischer M2 und zweiter Schalteinrichtung bereitstellen.

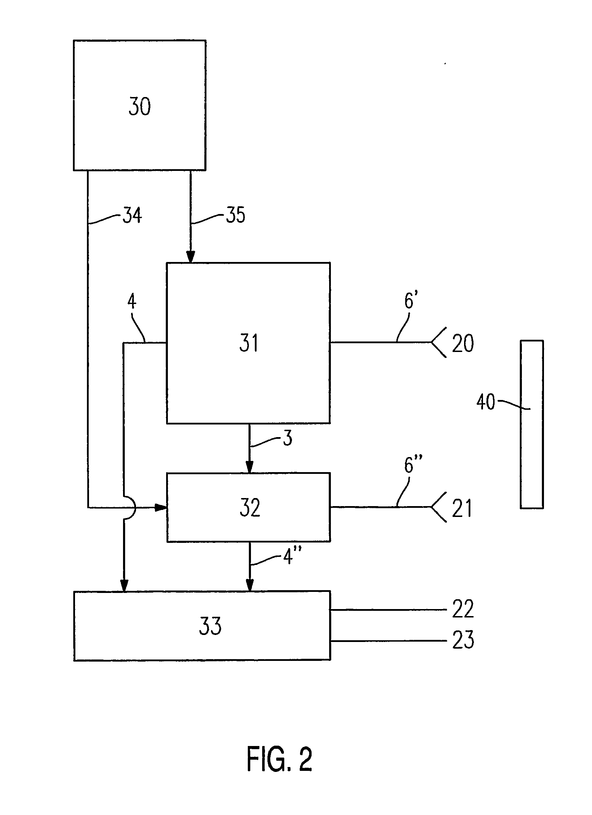

Figur 2 zeigt ein Blockdiagramm zur Erläuterung einer zweiten Ausführungsform der vorliegenden Erfindung.

In Figur 2 ist eine Pulserzeugungseinrichtung 30 dargestellt, welche ein Aktivierungssignal 35 für eine Schalteinrichtung in einer Signalerzeugungseinrichtung 31 sowie ein Aktivierungssignal 34 für eine Schalteinrichtung in einer ersten Signalauswerteeinrichtung 32 bereitstellt. In der Signalerzeugungseinrichtung 31 wird ein gepulstes moduliertes Signal 6' der Frequenz f_{ST} + f_{ZF} erzeugt, welches einer Sendeeinrichtung 20 z.B. einer Antenne zugeführt wird. Zusätzlich gibt die Signalerzeugungseinrichtung 31 ein Signal (Coho) der Frequenz f_{ZF} an eine zweite Signalverarbeitungs- bzw. eine Signalausgabeeinrichtung 33, sowie ein weiteres Signal (Stalo) der Frequenz f_{ST} an die erste Signalverarbeitungseinrichtung 32 ab.

Das über die Sendeeinrichtung 20 abgestrahlte gepulste demodulierte Signal 6' trifft auf ein Objekt 40, und wird von diesem reflektiert. Das von einer Empfangseinrichtung 21 empfangene reflektierte Signal 6" wird der ersten Signalverarbeitungseinrichtung 32 zugeführt. In dieser Signalverarbeitungseinrichtung 32 wird aus dem empfangenen Signal 6" zusammen mit dem Signal 3 (Stalo) und dem Aktivierungssignal 34 ein gepulstes demoduliertes Signal 4 " der Frequenz f_{ZF} gebildet, welches der zweiten Signalverarbeitungseinrichtung 33 zugeführt wird.

Aus diesem gepulsten demodulierten Signal 4" und dem Signal 4 (Coho) wird in der Signalverarbeitungs-/ Signalausgabeeinrichtung 33 ein nicht kohärentes Signal 22 für ein Kreuzechoverfahren und zur Abstandsmessung von statischen Zielen generiert. Des weiteren erzeugt die Signalverarbeitungs-/ Signalausgabeeinrichtung 33 ein kohärentes Signal, aus welchem man die Geschwindigkeit des Objekts 40 relativ zu der Sende- bzw. Empfangseinrichtung 20, 21 auswerten kann. Kohärent bzw. nicht-kohärent bezieht sich hier jeweils auf das Signal 4 (Coho), welches auch als Kohärenzsignal bezeichnet werden kann, wobei Kohärenz den festen Phasenbezug zwischen zwei Signalen bezeichnet.

Bei der vorliegenden Erfindung sind vorzugsweise zwei Frequenzpaare für das erste Signal der Frequenz f_{ST} und das zweite Signal der Frequenz f_{ZF} vorgesehen. Zum einen eine erste Frequenz von 21,5 GHz für f_{ST} (Stalo) mit einer zweiten Frequenz von 2,5 GHz für f_{ZF} (Coho); zum anderen eine erste Frequenz von 24 GHz für f_{ST} (Stalo) und eine zweite Frequenz von 2,5 GHz bis 3,5 GHz für f_{ZF} (Coho).

Voraussetzung für die Realisierung des Systems besteht darin, dass der Restträger unterhalb von -30 dBm liegen muss, welches durch eine Schalterisolation von 50 dB erreicht werden kann.

Obwohl die vorliegende Erfindung vorstehend anhand bevorzugter Ausführungsbeispiele beschrieben wurde, ist sie darauf nicht beschränkt, sondern auf vielfältige Weise modifizierbar.

So sind vor allem konkrete Bauelementangaben, z.B. eine Diode für einen Mischer oder ein Streifenleitungsgitterfilter für die Filtereinrichtung auch mit anderen Bauelementen bzw. Einrichtungen nachbildbar.

## Patentansprüche

1. Verfahren zum Erzeugen von HF-Signalen zum Bestimmen eines Abstandes und/oder einer Geschwindigkeit eines Objektes mit den Schritten:
Erzeugen eines gepulsten modulierten Signals (6') aus einem ersten Signal (3) und einem zweiten Signal (4) in einer Signalerzeugungseinrichtung (31; 1, 2, M1, 7, 8);
Senden des gepulsten modulierten Signals (6') mit einer Sendeeinrichtung (20) in Richtung eines Objektes (40);
Empfangen des von dem Objekt (40) reflektierten gepulsten modulierten Signals (6'') mit einer Empfangseinrichtung (21);
Erzeugen eines gepulsten demodulierten Signals (4") aus dem empfangenen gepulsten modulierten Signal (6'') und dem ersten Signal (3) in einer ersten Signalverarbeitungseinrichtung (32; M2, 15); und
Erzeugen eines kohärenten Signals (23) aus dem gepulsten demodulierten Signal (4") und dem zweiten Signal (4) und eines nicht kohärenten Signals (22) aus dem gepulsten demodulierten Signal (4 ") in einer zweiten Signalverarbeitungseinrichtung (33; M3, 16, 17, 18).

2. Verfahren nach Anspruch 1,
**dadurch gekennzeichnet,**
**dass** aus dem kohärenten Signal (23) eine Annäherungsgeschwindigkeit des Objektes (40) bestimmt wird.

3. Verfahren nach Anspruch 1 oder 2,
**dadurch gekennzeichnet,**
**dass** aus dem nicht-kohärenten Signal (22) ein Abstand zu dem Objekt (40) bestimmt wird.

4. Verfahren nach einem der vorangehenden Ansprüche,
**dadurch gekennzeichnet,**
**dass** in der Signalerzeugungseinrichtung (31; 1, 2, M1, 7, 8) mit einem ersten Oszillator (1) das erste Signal (3) und mit einem zweiten Oszillator (2) das zweite Signal (4) erzeugt wird, welche in einer ersten Modulationseinrichtung (M1) in ein moduliertes Signalpaar (5) moduliert werden.

5. Verfahren nach Anspruch 4,
**dadurch gekennzeichnet,**
**dass** das modulierte Signalpaar (5) in einer Filtereinrichtung (7), insbesondere einem Hochpassfilter, in ein gefiltertes moduliertes Signal (6) und durch eine erste Schalteinrichtung (8) in ein gepulstes moduliertes Signal (6') umgewandelt wird.

6. Verfahren nach einem der vorangehenden Ansprüche,
**dadurch gekennzeichnet,**
**dass** die erste Signalverarbeitungseinrichtung (32; M2, 15) das empfangene Signal (6") mit dem ersten Signal (3) in einer zweiten Modulationseinrichtung (M2) in ein demoduliertes Signal (4') und mittels einer zweiten Schalteinrichtung (15) in ein gepulstes demoduliertes Signal (4 ") umwandelt.

7. Verfahren nach einem der vorangehenden Ansprüche,
**dadurch gekennzeichnet,**
**dass** das gepulste demodulierte Signal (4") mittels einem Gleichrichter (17) und einer Filtereinrichtung (18), insbesondere einem Tiefpassfilter, in das nicht-kohärente Signal (22) umgewandelt wird.

8. Verfahren nach einem der vorangehenden Ansprüche,
**dadurch gekennzeichnet,**
**dass** das gepulste demodulierte Signal (4") in einer dritten Modulationseinrichtung (M3) mit dem zweiten Signal (4) zu einem zweifach demodulierten gepulsten Signal (4''') demoduliert wird.

9. Verfahren nach Anspruch 8,
**dadurch gekennzeichnet,**
**dass** das gepulste zweifach demodulierte Signal (4"') einem Integrator (16) zugeführt wird, welcher das Signal zu dem kohärenten Signal (23) aufintegriert.

10. Verfahren nach einem der vorangehenden Ansprüche,
**dadurch gekennzeichnet,**
**dass** in einer Pulserzeugungseinrichtung (30; 10, 11, 12, 13) Pulssignale (34, 35) zum Aktivieren der Schalteinrichtungen (8, 15) erzeugt werden.

11. Verfahren nach Anspruch 10,
**dadurch gekennzeichnet,**
**dass** ein extern und ein intern um einen festen Mittelwert einer vorbestimmten Periodendauer wechselnd leicht verschobenes Taktsignal (9, 10) in einer Multiplexeinrichtung (11) der Pulserzeugungseinrichtung (30) zusammengefasst werden und über Pulsformer (12, 13) Aktivierungssignale (34, 35) der Schalteinrichtungen (15, 8) generiert werden.

12. Verfahren nach Anspruch 11,
**dadurch gekennzeichnet,**
**dass** in den Pulsformern (12, 13) in etwa 1 ns lange Pulse gebildet werden.

13. Verfahren nach Anspruch 10 oder 11,
**dadurch gekennzeichnet,**
**dass** das extern und das intern um den festen Mittelwert der Periodendauer wechselnd leicht verschobene Taktsignal (9, 10) die Schalteinrichtungen (8, 15) alle 350 ns bis 450 ns aktiviert.

14. Verfahren nach einem der vorangehenden Ansprüche,
**dadurch gekennzeichnet,**
**dass** die Frequenz des ersten Signals (3) bei etwa 21,5 GHz und die Frequenz des zweiten Signals (4) bei etwa 2,5 GHz liegt.

15. Verfahren nach einem der vorangehenden Ansprüche,
**dadurch gekennzeichnet,**
**dass** die Frequenz des ersten Signals (3) bei etwa 24 GHz und die Frequenz des zweiten Signals (4) bei etwa 3,5 GHz liegt.

16. Verfahren nach einem der vorangehenden Ansprüche,
**dadurch gekennzeichnet,**
**dass** das von der Empfangseinrichtung (21) empfangene Signal (6") in einem low-noise-amplifier (14) verstärkt wird, bevor es der ersten Signalverarbeitungseinrichtung (32; M2, 15) zugeführt wird.

17. Verfahren nach einem der vorangehenden Ansprüche,
**dadurch gekennzeichnet,**
**dass** die Bestimmung des Abstandes eines Objektes (40) in einem Kreuzechoverfahren bzw. durch indirekte Triangulation mit einem Kreuzechopartner erfolgt.

18. Vorrichtung zum Erzeugen von HF-Signalen zum Bestimmen eines Abstandes- und/oder einer Geschwindigkeit eines Objektes mit:
einer Signalerzeugungseinrichtung (31; 1, 2, M1, 7, 8)) zum Erzeugen eines gepulsten modulierten Signals (6') aus einem ersten Signal (3) und einem zweiten Signal (4);
einer Sendeeinrichtung (20) zum Senden des gepulsten modulierten Signals (6') in Richtung eines Objektes (40);
einer Empfangseinrichtung (21) zum Empfangen des von dem Objekt (40) reflektierten gepulsten modulierten Signals (6") ;
einer ersten Signalverarbeitungseinrichtung (32; M2, 15) zum Erzeugen eines gepulsten demodulierten Signals (4") aus dem empfangenen gepulsten modulierten Signal (6") und dem ersten Signal (3); und
einer zweiten Signalverarbeitungseinrichtung (33; M3, 16, 17, 18) zum Erzeugen eines kohärenten Signals (23) aus dem gepulsten demodulierten Signal (4") und dem zweiten Signal (4) und eines nicht-kohärenten Signals (22) aus dem gepulsten demodulierten Signal (4").

19. Vorrichtung nach Anspruch 18,
**dadurch gekennzeichnet,**
**dass** die Signalerzeugungseinrichtung (31; 1, 2, M1, 7, 8) einen ersten Oszillator (1) zum Erzeugen des ersten Signals (3), einen zweiten Oszillator (2) zum Erzeugen des zweiten Signals (4) und eine erste Modulationseinrichtung (M1) zum Modulieren der beiden Signale (3, 4) zu einem modulierten Signalpaar (5) aufweist.

20. Vorrichtung nach Anspruch 19,
**dadurch gekennzeichnet,**
**dass** die Signalerzeugungseinrichtung (31; 1, 2, M1, 7, 8) eine Filtereinrichtung (7), insbesondere ein Hochpassfilter, zum Umwandeln des modulierten Signalpaars (5) in ein gefiltertes moduliertes Signal (6) und eine erste Schalteinrichtung (8) zum Umwandeln des gefilterten modulierten Signals (6) in ein gepulstes moduliertes Signal (6') aufweist.

21. Vorrichtung nach einem der vorangehenden Ansprüche 18 bis 20,
**dadurch gekennzeichnet,**
**dass** die erste Signalverarbeitungseinrichtung (32; M2, 15) eine zweite Modulationseinrichtung (M2) zum Umwandeln des empfangene Signals (6") mit dem ersten Signal (3) in ein demoduliertes Signal (4') und eine zweite Schalteinrichtung (15) zum Umwandeln des demodulierten Signals (4') in ein gepulstes demoduliertes Signal (4") aufweist.

22. Vorrichtung nach einem der vorangehenden Ansprüche 18 bis 21,
**dadurch gekennzeichnet,**
**dass** die zweite Signalverarbeitungseinrichtung (33; M3, 16, 17, 18) einen Gleichrichter (17) und eine Filtereinrichtung (18), insbesondere ein Tiefpassfilter, zum Umwandeln des gepulsten demodulierten Signals (4") in das nicht-kohärente Signal (22) aufweist.

23. Vorrichtung nach einem der vorangehenden Ansprüche 18 bis 22,
**dadurch gekennzeichnet,**
**dass** die zweite Signalverarbeitungseinrichtung (33; M3, 16, 17, 18) eine dritte Modulationseinrichtung (M3) zum Demodulieren des gepulsten demodulierten Signals (4") mit dem zweiten Signal (4) in ein zweifach demoduliertes gepulstes Signal (4"') aufweist.

24. Vorrichtung nach Anspruch 23,
**dadurch gekennzeichnet,**
**dass** die zweite Signalverarbeitungseinrichtung (33; M3, 16, 17, 18) einen Integrator (16) zum Aufintegrieren des gepulsten zweifach demodulierten Signals (4"') in das kohärente Signal (23) aufweist.

25. Vorrichtung nach einem der vorangehenden Ansprüche 18 bis 24,
**dadurch gekennzeichnet,**
**dass** die Vorrichtung eine Pulserzeugungseinrichtung (30; 10, 11, 12, 13) zum Erzeugen von Pulssignalen (34, 35) zum Aktivieren der Schalteinrichtungen (8, 15) aufweist.

26. Vorrichtung nach Anspruch 25,
**dadurch gekennzeichnet,**
**dass** die Pulserzeugungseinrichtung (30; 10, 11, 12 ,13) eine Multiplexeinrichtung (11) und Pulsformer (12, 13) zum Erzeugen eines extern und eines intern um einen festen Mittelwert einer Periodedauer wechselnd leicht verschobenen Taktsignals (9, 10) zum Aktivieren der Schalteinrichtungen (15, 8) aufweist.

27. Vorrichtung nach einem der vorangehenden Ansprüche 18 bis 26,
**dadurch gekennzeichnet,**
**dass** die Modulationseinrichtungen (M1, M2, M3) Mischer sind, wobei die erste Modulationseinrichtung (M1), insbesondere eine Diode aufweisend, unbalanciert und die zweite und dritte Modulationseinrichtung (M2, M3) einfach balanciert sind.

28. Vorrichtung nach einem der vorangehenden Ansprüche 18 bis 27,
**dadurch gekennzeichnet,**
**dass** die dritte Modulationseinrichtung (M3) einen integrierten Gilbert-Cell-Mischer aufweist.

29. Vorrichtung nach einem der vorangehenden Ansprüche 18 bis 28,
**dadurch gekennzeichnet,**
**dass** zwischen der zweiten Modulationseinrichtung (M2) und der zweiten Schalteinrichtung (15) eine Verstärkereinrichtung (14'), insbesondere ein ZF- Vorverstärker, zur Signalpegelanhebung vorgesehen ist.

## Claims

1. Method for generating RF signals for the purpose of determining a distance and/or a speed of an object, said method having the following steps of:
generating a pulsed modulated signal (6') from a first signal (3) and a second signal (4) in a signal generating device (31; 1, 2, M1, 7, 8);
using a transmission device (20) to transmit the pulsed modulated signal (6') in the direction of an object (40);
using a reception device (21) to receive the pulsed modulated signal (6'') reflected by the object (40);
generating a pulsed demodulated signal (4'') from the received pulsed modulated signal (6") and the first signal (3) in a first signal processing device (32; M2, 15); and
generating a coherent signal (23) from the pulsed demodulated signal (4'') and the second signal (4) and generating a non-coherent signal (22) from the pulsed demodulated signal (4'') in a second signal processing device (33; M3, 16, 17, 18).

2. Method according to Claim 1,
**characterized in that**
an approach speed of the object (40) is determined from the coherent signal (23).

3. Method according to Claim 1 or 2,
**characterized in that**
a distance to the object (40) is determined from the non-coherent signal (22).

4. Method according to one of the preceding claims,
**characterized in that**
a first oscillator (1) is used to generate the first signal (3) and a second oscillator (2) is used to generate the second signal (4) in the signal generating device (31; 1, 2, M1, 7, 8), which signals are modulated to form a modulated signal pair (5) in a first modulation device (M1).

5. Method according to Claim 4,
**characterized in that**
the modulated signal pair (5) is converted into a filtered modulated signal (6) in a filter device (7), in particular a high-pass filter, and is converted into a pulsed modulated signal (6') using a first switching device (8).

6. Method according to one of the preceding claims,
**characterized in that**
the first signal processing device (32; M2, 15) converts the received signal (6'') into a demodulated signal (4') using the first signal (3) in a second modulation device (M2) and converts it into a pulsed demodulated signal (4") using a second switching device (15).

7. Method according to one of the preceding claims,
**characterized in that**
the pulsed demodulated signal (4") is converted into the non-coherent signal (22) using a rectifier (17) and a filter device (18), in particular a low-pass filter.

8. Method according to one of the preceding claims,
**characterized in that**
the pulsed demodulated signal (4'') is demodulated using the second signal (4) in a third modulation device (M3) to form a twice-demodulated pulsed signal (4''').

9. Method according to Claim 8,
**characterized in that**
the pulsed twice-demodulated signal (4''') is supplied to an integrator (16) which integrates the signal to form the coherent signal (23).

10. Method according to one of the preceding claims,
**characterized in that**
pulsed signals (34, 35) are generated in a pulse generating device (30; 10, 11, 12, 13) for the purpose of activating the switching devices (8, 15).

11. Method according to Claim 10,
**characterized in that**
a clock signal (9) which has been alternately externally shifted to a slight extent by a fixed mean value of a predetermined period duration and a clock signal (10) which has been alternately internally shifted to a slight extent by a fixed mean value of a predetermined period duration are combined in a multiplexing device (11) of the pulse generating device (30), and activation signals (34, 35) for the switching devices (15, 8) are generated using pulse shapers (12, 13).

12. Method according to Claim 11,
**characterized in that**
pulses having a length of approximately 1 ns are formed in the pulse shapers (12, 13).

13. Method according to Claim 10 or 11,
**characterized in that**
the clock signal (9) which is alternately externally shifted to a slight extent by the fixed mean value of the period duration and the clock signal (10) which is alternately internally shifted to a slight extent by the fixed mean value of the period duration activate the switching devices (8, 15) every 350 ns to 450 ns.

14. Method according to one of the preceding claims,
**characterized in that**
the frequency of the first signal (3) is approximately 21.5 GHz and the frequency of the second signal (4) is approximately -2.5 GHz.

15. Method according to one of the preceding claims,
**characterized in that**
the frequency of the first signal (3) is approximately 24 GHz and the frequency of the second signal (4) is approximately 3.5 GHz.

16. Method according to one of the preceding claims,
**characterized in that**
the signal (6'') received by the reception device (21) is amplified in a low-noise amplifier (14) before it is supplied to the first signal processing device (32; M2, 15).

17. Method according to one of the preceding claims,
**characterized in that**
the distance of an object (40) is determined in a cross-echo method or by means of indirect triangulation with a cross-echo partner.

18. Apparatus for generating RF signals for the purpose of determining a distance and/or a speed of an object, said apparatus having:
a signal generating device (31; 1, 2, M1, 7, 8) for generating a pulsed modulated signal (6') from a first signal (3) and a second signal (4);
a transmission device (20) for transmitting the pulsed modulated signal (6') in the direction of an object (40);
a reception device (21) for receiving the pulsed modulated signal (6") reflected by the object (40) ;
a first signal processing device (32; M2, 15) for generating a pulsed demodulated signal (4") from the received pulsed modulated signal (6") and the first signal (3); and
a second signal processing device (33; M3, 16, 17, 18) for generating a coherent signal (23) from the pulsed demodulated signal (4") and the second signal (4) and for generating a non-coherent signal (22) from the pulsed demodulated signal (4'').

19. Apparatus according to Claim 18,
**characterized in that**
the signal generating device (31; 1, 2, M1, 7, 8) has a first oscillator (1) for generating the first signal (3), a second oscillator (2) for generating the second signal (4) and a first modulation device (M1) for modulating the two signals (3, 4) to form a modulated signal pair (5) .

20. Apparatus according to Claim 19,
**characterized in that**
the signal generating device (31; 1, 2, M1, 7, 8) has a filter device (7), in particular a high-pass filter, for converting the modulated signal pair (5) into a filtered modulated signal (6) and a first switching device (8) for converting the filtered modulated signal (6) into a pulsed modulated signal (6').

21. Apparatus according to one of the preceding Claims 18 to 20,
**characterized in that**
the first signal processing device (32; M2, 15) has a second modulation device (M2) for converting the received signal (6") into a demodulated signal (4') using the first signal (3) and a second switching device (15) for converting the demodulated signal (4') into a pulsed demodulated signal (4").

22. Apparatus according to one of the preceding Claims 18 to 21,
**characterized in that**
the second signal processing device (33; M3, 16, 17, 18) has a rectifier (17) and a filter device (18), in particular a low-pass filter, for converting the pulsed demodulated signal (4") into the non-coherent signal (22).

23. Apparatus according to one of the preceding Claims 18 to 22,
**characterized in that**
the second signal processing device (33; M3, 16, 17, 18) has a third modulation device (M3) for demodulating the pulsed demodulated signal (4 ") into a twice-demodulated pulsed signal (4''') using the second signal (4).

24. Apparatus according to Claim 23,
**characterized in that**
the second signal processing device (33; M3, 16, 17, 18) has an integrator (16) for integrating the pulsed twice-demodulated signal (4''') into the coherent signal (23).

25. Apparatus according to one of the preceding Claims 18 to 24,
**characterized in that**
the apparatus has a pulse generating device (30; 10, 11, 12, 13) for generating pulsed signals (34, 35) for the purpose of activating the switching devices (8 , 15).

26. Apparatus according to Claim 25,
**characterized in that**
the pulse generating device (30; 10, 11, 12, 13) has a multiplexing device (11) and pulse shapers (12, 13) for generating a clock signal (9) which has been alternately externally shifted to a slight extent by a fixed mean value of a period duration and a clock signal (10) which has been alternately internally shifted to a slight extent by a fixed mean value of a period duration for the purpose of activating the switching devices (15, 8).

27. Apparatus according to one of the preceding Claims 18 to 26,
**characterized in that**
the modulation devices (M1, M2, M3) are mixers, the first modulation device (M1), in particular having a diode, being unbalanced and the second and third modulation devices (M2, M3) being singly balanced.

28. Apparatus according to one of the preceding Claims 18 to 27,
**characterized in that**
the third modulation device (M3) has an integrated Gilbert cell mixer.

29. Apparatus according to one of the preceding Claims 18 to 28,
**characterized in that**
an amplifier device (14'), in particular an IF preamplifier, is provided between the second modulation device (M2) and the second switching device (15) for the purpose of increasing the signal level.

## Revendications

1. Procédé de génération de signaux HF pour déterminer une distance et/ou une vitesse d'un objet comprenant les étapes suivantes :
- génération d'un signal modulé, pulsé (6') à partir d'un premier signal (3) et d'un second signal 4 dans une installation de génération de signal (31, 1, 2, M1, 7, 8),
- émission du signal modulé, pulsé (6') à l'aide d'une installation d'émission (20) en direction d'un objet (40),
- réception du signal modulé pulsé (6") réfléchi par l'objet (40) à une installation de réception (21),
- génération d'un signal démodulé, pulsé (4") à partir du signal modulé, pulsé, reçu (6") et du premier signal (3) dans une première installation de traitement de signal (32, M2, 15), et
- génération d'un signal cohérent (23) à partir du signal démodulé pulsé (4") et du second signal (4) ainsi que d'un signal non cohérent (22) à partir du signal démodulé, pulsé, (4") dans une seconde installation de traitement de signal (33, M3, 16, 17, 18).

2. Procédé selon la revendication 1,
**caractérisé en ce qu'**
on détermine la vitesse d'approche de l'objet (40) à partir du signal cohérent (23).

3. Procédé selon l'une quelconque des revendications 1 ou 2,
**caractérisé en ce qu'**
à partir du signal non cohérent (22), on détermine la distance à l'objet (40).

4. Procédé selon l'une quelconque des revendications précédentes,
**caractérisé en ce que**
dans l'installation de génération de signal (31, 1, 2 M1, 7, 8), avec un premier oscillateur (1) on génère le premier signal (3) et avec un second oscillateur (2), on génère le second signal (4) qui sont modulés dans une première installation de modulation (M1) pour former une paire de signaux modulés (5).

5. Procédé selon la revendication 4,
**caractérisé en ce que**
la paire de signaux modulés (5) est convertie dans une première installation de filtre (7) notamment dans un filtre passe-haut en un signal modulé, filtré, (6) et par une seconde installation de commutation (8) en un signal modulé, pulsé, (6').

6. Procédé selon l'une quelconque des revendications précédentes,
**caractérisé en ce que**
la première installation de traitement de signal (32, M2, 15) convertit le signal reçu (6") avec le premier signal (3) dans une seconde installation de modulation (M2) en un signal démodulé (4') et à l'aide d'une seconde installation de commutation (15), en un signal démodulé, pulsé, (4').

7. Procédé selon l'une quelconque des revendications précédentes,
**caractérisé en ce que**
le signal démodulé pulsé, (4") est converti par un redresseur (17) et une installation de filtre (18) notamment un filtre passe-bas pour donner le signal non cohérent (22).

8. Procédé selon l'une quelconque des revendications précédentes,
**caractérisé en ce que**
le signal démodulé, pulsé, (4") est démodulé dans une troisième installation de modulation (M3) avec le second signal (4) pour donner un signal pulsé, deux fois démodulé, (4'").

9. Procédé selon la revendication 8,
**caractérisé en ce que**
le signal pulsé, démodulé deux fois (4'") est appliqué à un intégrateur (16) qui intègre le signal en un signal cohérent (23).

10. Procédé selon l'une quelconque des revendications précédentes,
**caractérisé en ce que**
dans une installation de génération d'impulsion (30, 10, 11, 12, 13) on génère des signaux impulsionnels (34, 35) pour activer les installations de commutation (8, 15).

11. Procédé selon la revendication 10,
**caractérisé en ce qu'**
on réunit un signal d'horloge (9, 10), externe et un signal d'horloge interne légèrement décalé en alternance par rapport à une valeur moyenne fixe, selon une durée de période prédéfinie dans une installation de multiplexage (11) de l'installation de générateur d'impulsions (30) et par un formeur d'impulsions (12, 13) on génère des signaux d'activation (34, 35) des installations de commutation (15, 8).

12. Procédé selon la revendication 11,
**caractérisé en ce que**
dans les formeurs d'impulsions (12, 13), on forme des impulsions d'une durée d'environ 1 ns.

13. Procédé selon l'une quelconque des revendications 10 ou 11,
**caractérisé en ce que**
le signal d'horloge (9, 10) externe et interne, légèrement décalé, en alternance par rapport à la valeur moyenne fixe de la durée de la période, active les installations de commutation (8, 15) toutes les 350 ns jusqu'à 450 ns.

14. Procédé selon l'une quelconque des revendications précédentes,
**caractérisé en ce que**
la fréquence du premier signal (3) se situe à environ 21,5 GHz et celle du second signal (4) se situe à environ 2,5 GHz.

15. Procédé selon l'une quelconque des revendications précédentes,
**caractérisé en ce que**
la fréquence du premier signal (3) se situe à environ 24 GHz et la fréquence du second signal (4) se situe à environ 3,5 GHz.

16. Procédé selon l'une quelconque des revendications précédentes,
**caractérisé en ce que**
le signal (6") reçu par l'installation de réception (21) est amplifié dans un amplificateur à faible bruit (14) avant d'être appliqué à la première installation de traitement de signal (32 ; M2, 15).

17. Procédé selon l'une quelconque des revendications précédentes,
**caractérisé en ce que**
la détermination de la distance d'un objet (40) se fait par un procédé d'échos croisés ou par une triangulation indirecte avec un partenaire d'échos croisés.

18. Dispositif générateur de signaux HF pour déterminer une distance et/ou une vitesse d'un objet comprenant :
- un générateur de signaux (31, 1, 2, M1, 7, 8) pour générer un signal modulé pulsé (6') à partir d'un premier signal (3) et d'un second signal (4),
- une installation d'émission (20) pour émettre le signal modulé, pulsé (6') en direction d'un objet (40),
- une installation de réception (21) pour recevoir le signal modulé pulsé (6") réfléchi par l'objet (10),
- une première installation de traitement de signal (32, M2, 15) pour générer un signal démodulé pulsé, (4") à partir du signal pulsé, modulé, reçu (6") et du premier signal (3), et
- une seconde installation de traitement de signal (33, M3, 16, 17, 18) pour générer un signal cohérent (23) à partir du signal démodulé pulsé (4") et du second signal 4 et un signal non cohérent (22) à partir du signal démodulé pulsé (4").

19. Dispositif selon la revendication 18,
**caractérisé en ce que**
le générateur de signal (31, 1, 2, M1, 7, 8) comprend un premier oscillateur 1 pour générer un premier signal (3), un second oscillateur (2) pour générer un second signal (4) et une première installation de modulation (M1) pour moduler les deux signaux (3, 4) et former une paire de signaux modulés (5).

20. Dispositif selon la revendication 19,
**caractérisé en ce que**
le générateur de signal (31, 1, 2, M1, 7, 8) comporte une installation de filtre (7) notamment un filtre passe-haut pour convertir la paire de signaux modulés (5) en un signal modulé, filtré, (6) et une première installation de commutation (8) pour convertir le signal modulé filtré (6) en un signal modulé, impulsionnel (6').

21. Dispositif selon l'une quelconque des revendications 18 à 20,
**caractérisé en ce que**
la première installation de traitement de signal (32, M2, 15) comprend une seconde installation de modulation (M2) pour convertir le signal reçu (6") avec le premier signal (3)en un signal démodulé (4') et une seconde installation de commutation 15 pour convertir le signal démodulé 4' en un signal démodulé, pulsé (4").

22. Dispositif selon l'une quelconque des revendications 18 à 21,
**caractérisé en ce que**
la seconde installation de traitement de signal (33, M3, 16, 17, 18) comporte un redresseur (17) et une installation de filtre (18) notamment un filtre passe-bas pour convertir le signal démodulé pulsé (4") et donner le signal non cohérent (22).

23. Dispositif selon l'une quelconque des revendications 18 à 22,
**caractérisé en ce que**
la seconde installation de traitement de signal (33, M3, 16, 17, 18) comprend une troisième installation de modulation (M3) pour démoduler le signal démodulé pulsé (4") avec le second signal (4) et donner un signal pulsé (4'") deux fois démodulé.

24. Dispositif selon la revendication 23,
**caractérisé en ce que**
la seconde installation de traitement de signal (33, M3, 16, 17, 18) comporte un intégrateur (16) pour intégrer le signal pulsé deux fois démodulé (4") en un signal cohérent (23).

25. Dispositif selon l'une quelconque des revendications 18 à 24,
**caractérisé en ce que**
le dispositif comporte un générateur d'impulsions (30, 10, 11, 12, 13), pour générer des signaux impulsionnels (34, 35) et activer les installations de commutation (8, 15).

26. Dispositif selon la revendication 25,
**caractérisé en ce que**
le générateur d'impulsions (30, 10, 11, 12, 13) comporte une installation de multiplexage (11) et un formeur d'impulsions (12, 13) pour générer un signal d'horloge (9, 10) externe et un signal interne, variant légèrement par rapport à une valeur moyenne fixe d'une durée de période, pour activer les installations de commutation (15, 8).

27. Dispositif selon l'une quelconque des revendications 18 à 26,
**caractérisé en ce que**
les installations de modulation (M1,M2, M3) sont des mélangeurs, la première installation de modulation (M1) ayant notamment une diode, non équilibrée et la seconde et la troisième installation de modulation (M2, M3) sont équilibrées de manière simple.

28. Dispositif selon l'une quelconque des revendications 18 à 27,
**caractérisé en ce que**
la troisième installation de modulation (M3) comporte un mélangeur à cellules de Gilbert, d'intégration.

29. Dispositif selon l'une quelconque des revendications 18 à 28,
**caractérisé en ce qu'**
un amplificateur 14' notamment un préamplificateur de fréquence intermédiaire ZF est prévu pour relever le niveau du signal entre la seconde installation de modulation (M2) et la seconde installation de commutation (15).
